# EUROPÄISCHE PATENTSCHRIFT

(11) **EP 1 872 934 B1**
(45) Veröffentlichungstag und Bekanntmachung des Hinweises auf die Patenterteilung: **28.06.2017**
(21) Anmeldenummer: 07012800.4
(22) Anmeldetag: 29.06.2007
(51) Int. Cl.: B32B 5/24, D04H 13/00

(54) **Zugelastischer Flächenverbundstoff, Verfahren zum Herstellen eines derartigen Flächenverbundstoffs, Verschlussband, Bandmaterial und Windel**
Tenso-elastic laminar composite, method for manufacturing such a laminar composite, sealing tape, strip material and napkin
Tissu composite de surface élastique, procédé de fabrication d'un tel tissu composite de surface, bande de fermeture, matériau en bande et couche

(30) Priorität: 29.06.2006 DE 102006030438; 21.11.2006 DE 102006055089
(43) Veröffentlichungstag der Anmeldung: 02.01.2008
(73) Patentinhaber: Lohmann-koester GmbH & Co. KG, 96146 Altendorf (DE)
(72) Erfinder: Felkl, Christian, 96149 Breitengüssbach (DE); Degelmann, Walter, Dr., 95326 Kulmbach (DE); Schober, Uwe, 96179 Rattelsdorf (DE)
(74) Vertreter: Reuther, Martin

(56) Entgegenhaltungen:
- DE-A1- 19 501 201

## Beschreibung

Die Erfindung betrifft einen zugelastischen Flächenverbundstoff, ein Verfahren zum Herstellen eines Flächenverbundstoffs, ein Verschlussband, ein Bandmaterial und eine Windel.

Im Industriebereich der Hygieneprodukte hat es sich bewährt, verschließbare Hygieneartikel mit Verschlussbändern auszustatten. Dies gilt insbesondere für Babywindeln und Inkontinenzwindeln, welche zum Anlegen bzw. zum Ablegen über die Hüfte des Trägers gezogen werden müssen und daher einen Verschließmechanismus erfordern. Mit einem Verschlussband, meist mit zwei Verschlussbändern, lässt sich dies leicht bewerkstelligen.

Ein hierzu verwendetes Verschlussband ist in der Regel in einem Befestigungsbereich permanent am Hygieneartikel befestigt, im Falle einer Windel üblicherweise an deren Windelohr. Hierzu dient meist eine Klebstoffverbindung zwischen dem Befestigungsbereich des Verschlussbandes und dem Hygieneartikel.

Die eigentliche Schließfunktion übernimmt ein Schließbereich am Verschlussband. Der Bereich ist definiert durch einen Bereich am freien Benutzerende des Verschlussbandes, welcher dazu eingerichtet ist, mit einer Oberfläche des Hygieneartikels lösbar verbunden zu werden, während der Befestigungsbereich permanent befestigt ist.

Moderne Windelverschlussbänder tragen dem Komfortbedürfnis des Windelträgers zunehmend Rechnung. Um selbst bei intensiveren Bewegungen keine unangenehmen Druckstellen zu erzeugen, aber dennoch sicher schließend zu sein, sind die Verschlussbänder in der Regel elastisch ausgestaltet. Der elastische Bereich muss sich nicht über das gesamte Verschlussband erstrecken, vielmehr kann es ausreichen, wenn nur ein elastischer Abschnitt im Band eingefügt ist.

Üblicherweise werden zum Herstellen von zugelastischen Verschlussbändern elastische Trägerfilme eingesetzt.

Um eine angenehme Haptik eines solchen Trägerfilms zu erreichen, werden diese häufig zumindest an einer Seite mit einem textilen Material kaschiert. Auf diese Weise ergibt sich ein Flächenverbundstoff, welcher insgesamt elastisch ist, aber zumindest an einer Seite die eher kühle und folienartige Haptik eines Trägerfilms durch die textile Kaschierung bedeckt.

Begrifflich sei hierzu erläutert, dass unter einer Kaschierung jeglicher Auftrag auf einen flächigen Träger verstanden werden kann, welcher in seiner Gesamtheit dem Träger eine haptisch veränderte Oberfläche gibt. So kann eine Kaschierung insbesondere entweder durch eine eigenstabile Textilschicht oder durch eine Lage aus nicht eigenstabilen Einzelelementen sein.

Die US 2004/0127128 A1 schlägt vor, Endlosfasern als Vlies auf einer elastischen Folie abzulegen. Über eine flächige Verbindung zwischen den Endlosfasern und der Folie wird ein sicherer Halt gewährleistet. Ohne die elastische Folie ist die aufgebrachte Lage nicht eigenstabil.

Die DE 697 27 584 T2 und die DE 103 58 409 A1 beschreiben ein Laminat aus einer elastischen Trägerfolie und einer eigenstabilen Gewebe- oder Vliesfaserschicht, jeweils gebildet aus langen Fasern oder aus Endlosfasern. Die eigenständige textile Schicht wird beim Laminieren mit dem elastischen Trägerfilm verbunden.

Weitere Verschlussbänder, meist für Babywindeln oder Inkontinenzwindeln, zeigen unter anderem die DE 28 56 869 A1, die DE 197 32 499 A1, die DE 101 29 180 A1, die DE 101 40 621 A1, die DE 101 40 622 A1, die EP 0 233 704 A2, die EP 0 233 704 B1, die EP 0 235 014 B1, die EP 0 321 232 B1, die EP 0 418 951 B1, die EP 0 793 953 A2, die EP 0 795 307 A2, die EP 0 800 378 B1, die EP 0 840 585 B1, die EP 0 974 326 B1, die EP 1 000 598 A1, die EP 1 024 774 B1, die EP 1 484 041 A1, die EP 1 484 042 A1, die FR 2 586 558, die FR 2 606 257, die JP 7108-4 C, die US 6,210,389 B1, die US 5,624,429, die US 4,670,012, die US 4,959,265, die US 5,399,219, die US 5,611,790, die US 5,624,429, die US 5,676,652, die US 5,759,317, die US 5,997,522, die US 6,210,389 B1, die US 6,393,673 B1, die US 6,402,730 B1, die US 6,428,525 B1, die US 6,454,751 B1, die US 2002/0095130 A1, die US 2003/0004490 A1, die US 2003/0009144 A1, die US 2003/0023322, die US 2003/0034583 A1, die US 2003/0060794, die WO 96/31181 A1, die WO 97/23186 A1, die WO 97/32555 A1, die WO 97/36566, die WO 99/06600, die WO 00/27330 A1, die WO 01/67911 A2, die WO 01/68019 A1, die WO 01/74283 A1, die WO 02/49567 A1, die WO 02/49568 A1 und die WO 03/003962 A1.

Von der Gattung her zu unterscheiden sind elastische Flächenverbundmaterialien, die für Oberbekleidung u.ä. zur Anwendung kommen und wie sie beispielsweise in der DE 19 18 228 U, der DE 19 06 678 B2, der DD 56 183, der DD 214 403, der US 4,402,690, der US 3,967,623, de WO 03/106760 A1, der JP 2003-213577, der JP 59-222330, der DE 695 18 906 T2 oder der DE 600 20 808 T2 offenbart sind. Diesen Materialien kommen keine unter Zugspannung aufzubringenden Funktionen zu, vielmehr sollen sie lediglich aus Tragekomfortgründen ausreichend elastisch ausgebildet sein. Insbesondere zeichnen sich diese Materialien in der Regel dadurch aus, dass lediglich thermoplastische Filme zur Anwendung kommen, so dass eine Zugelastizität, wie sie beispielsweise durch thermoplastische Elastomere (TPE) erzielt werden kann, nicht vorliegt.

Auch die US 2004/0033334 A1 beschäftigt sich mit der Beflockung von Bekleidungsstücken aus Latex oder Latex/Neoprene, insbesondere mit entsprechend aufbereiteter Baumwolle. Auch hierbei handelt es sich somit um Gegenstände, die eine Zugspannung nicht aufbringen können sondern die aus Gründen des Tragekomforts ausreichend elastisch ausgebildet sein sollen. Auch werden die Gegenstände erst in ihrer dreidimensionalen Struktur entsprechend ausgeformt, bevor Sie beflockt werden.

Der Erfindung liegt allerdings die Aufgabe zugrunde, einen verbesserten zugelastischen Flächenverbundstoff, insbesondere für Windelverschlussbänder, zur Verfügung zu stellen, der insbesondere eine geringere Aktivierungskraft benötigt.

Nach einem ersten Aspekt der Erfindung löst diese Aufgabe ein zugelastischer Flächenverbundstoff mit einem elastischen Trägerfilm, der zumindest an einer Seite mit einem textilen Material kaschiert ist, wobei das textile Material augserichtete Einzelfasern umfasst, welche jeweils ausgerichtet mit dem elastischen Trägerfilm verbunden sind.

Begrifflich sei hierzu zunächst erläutert, dass die Fasern, welche vorschlagsgemäß entweder einzeln vorliegen sollen, als eher kurze Gebilde aufzufassen sind. Die Endlosfasern aus der US 2004/0127128 A1 sind demgegenüber als Filamente aufzufassen. Die hier vorgeschlagenen "Fasern" unterscheiden sich davon deutlich. Als eine "Faser" wird im Rahmen der vorliegenden Anmeldung ein Gebilde mit einer Länge von maximal 10 mm verstanden.

Schließlich sei noch begrifflich erläutert, dass das textile Material die Einzelfasern nicht nur vereinzelt aufweisen soll, sondern dass das textile Material zumindest weitgehend aus den vorgeschlagenen Einzelfasern bestehen soll.

Vorteilhaft erzeugt der vorgestellte Aspekt der Erfindung einen Flächenverbundstoff, welcher bei ausreichender Flächendichte von Fasern auf der Oberfläche des Trägerfilms den haptischen Eindruck eines durchgehenden textilen Materials erzeugt. Die Fasern sind jedoch nicht unmittelbar miteinander verbunden, wie dies bei herkömmlichen textilen Materialien, aber auch beispielsweise bei dem zugelastischen Flächenverbundstoff nach der DE 103 58 409 A1, der Fall ist. Vielmehr sind die Fasern jeweils nur mit dem elastischen Trägerfilm verbunden. Infolgedessen ist die Elastizität des Trägerfilms auch bei einem ersten Dehnungsvorgang nicht eingeschränkt. Mit anderen Worten ausgedrückt, wird einer potentiellen elastischen Dehnung des Trägerfilms bei der vorgeschlagenen Kaschierung keine oder nur eine geringe Gegenkraft aus einem Zusammenhalt der Textilfasern entgegengesetzt.

Der vorgestellte Aspekt der Erfindung ermöglicht es somit, eine textile Kaschierung und die damit verbundene vorteilhafte Haptik auf einem elastischen Trägerfilm zu erzeugen, ohne dass die Elastizität, insbesondere die Anfangselastizität des Trägerfilms wesentlich eingeschränkt wird.

In vorliegendem Zusammenhang bezeichnet der Begriff "zugelastischer Flächenverbundstoff insbesondere einen Flächenverbundstoff, welcher sich in wenigstens eine Längserstreckungsrichtung um zumindest 50 %, vorzugsweise sogar um 100 % bzw. 200 % verstrecken lässt, ohne dass es reißt. Insbesondere ein derartiger Flächenverbundstoff eignet sich als Verschlussband, da durch die hohe Verstreckbarkeit ein Nutzer die Zugkräfte, mit welchen er etwas verschließen möchte sehr fein nach seinen Bedürfnissen einstellen kann. Die hohe Verstreckbarkeit bedingt darüber hinaus, dass der Verschluss verhältnismäßig nachgiebig ist und sich somit geänderten Begebenheiten gut anpassen kann.

Bevorzugt weisen die Einzelfasern zu mindestens 50 %, bevorzugt zu mindestens 75 %, vor allem zu mindestens 90 %, jeweils genau einen Verbindungsbereich zum elastischen Trägerfilm auf. Wenn nur ein Verbindungsbereich zwischen Faser und Trägerfilm vorliegt, erfährt die Elastizität des Trägerfilms keine Einschränkung. Um den Herstellungsprozess möglichst wirtschaftlich gestalten zu können, wird es in der Praxis vereinzelt vorkommen können, dass eine Faser an zwei voneinander beabstandeten Stellen mit dem Trägerfilm verbunden ist. Beispielsweise kann die Faser gekrümmt sein und mit beiden Faserenden mit dem Trägerfilm verbunden sein. Es ist unmittelbar ersichtlich, dass in diesem Falle die Elastizität des Trägerfilms zwischen den beiden Verbindungsstellen der Faser eingeschränkt ist, sobald die Dehnung dazu führt, dass die Faser vollständig gestreckt wird. Da - wie vorstehend bereits erläutert - relativ kurze Fasern zum Einsatz kommen sollen, wäre eine solche Maximaldehnung schnell erreicht.

Dennoch ist auch bei vereinzelten mehrfach verbundenen Fasern keine Beeinträchtigung des Flächenverbundstoffs insgesamt zu befürchten. Wenn in einem solchen Falle die jeweils in ihrer Maximaldehnung begrenzte Stelle überstreckt wird, wird sich ein Ende der mehrfach verbundenen Faser aus der Verbindung lösen, oder die Faser wird reißen. Sobald dies der Fall ist, liegt eine Faser mit nur einem Verbindungsbereich oder liegen zwei Fasern mit jeweils genau einem Verbindungsbereich vor.

Die Einzelfasern können beispielsweise mit ihrem Verbindungsbereich in den elastischen Trägerfilm eingedrungen sein. Bei einem solchen Aufbau kann der zugelastische Flächenverbundstoff auf jegliche weiteren Hilfsstoffe verzichten. Ebenso können die Fasern unmittelbar an der Oberfläche des elastischen Trägerfilms anhaften, beispielsweise durch eine ausreichend hohe Oberflächenadhäsion, insbesondere wenn die Fasern mit Druck bzw. Kraft auf die Oberfläche gedruckt bzw. gepresst werden und diese ein wenig verformen, ohne ganz einzudringen.

Als Variante ist möglich, dass die Einzelfasern mit ihrem Verbindungsbereich in eine Verbindungsschicht eingedrungen sind, welche ihrerseits mit dem elastischen Trägerfilm flächig verbunden ist. Eine solche Verbindungsschicht kann den Vorteil bringen, dass die Fasern in sie leichter eingebracht bzw. leichter mit dieser verbunden werden können als in die Oberfläche des elastischen Trägerfilms selbst. Durch die flächige Verbindung zwischen der Verbindungsschicht und dem elastischen Trägerfilm ist auch hier ein stabiler Aufbau des Flächenverbundstoffs gewährleistet.

Wenn eine Verbindungsschicht zum Herstellen der Verbindung zwischen der textilen Kaschierung und dem elastischen Trägerfilm gewählt wird, wird vorgeschlagen, dass die Verbindungsschicht eine Hotmelt-Kleberschicht ist. In bzw. an eine solche Schicht eines Schmelzklebers können die Fasern besonders einfach sicher ein- bzw. angebracht werden, wenn dieser erwärmt ist. Hierbei ist es nicht zwingend notwendig, dass die Hotmelt-Kleberschicht während der normalen Bedingungen des Flächenverbundstoffs ihre klebenden Eigenschaften zur Gänze verliert, was an sich zunächst die Gefahr in sich birgt, dass die Fasern über eine größere Länge mit dieser Schicht in Kontakt kommen, wodurch die Vorteile vorliegender Erfindung vermindert werden könnten. Durch die natürliche Eigensteifigkeit der Fasern wird diesem Effekt jedoch entgegengewirkt, so dass die Hotmelt-Kleberschicht auch bei Betriebstemperatur, insbesondere bei Raumtemperatur, noch klebrig sein kann.

Vorzugsweise ist die Verbindungsschicht verformbar gewählt. So kann beispielsweise ein Klebstoff zur Anwendung kommen, der plastisch oder sogar elastisch verformbar ist. Bei letzterem ist es vorteilhaft, wenn die Rückstellkräfte, die durch den Klebstoff bedingt sind, gering sind als die Rückstellkräfte aufgrund des Trägerfilms. Auf diese Weise werden die zugelastischen Eigenschaften nach wie vor im Wesentlichen durch den Trägerfilm beherrscht.

Vorzugsweise liegt die Stärke der Verbindungsschicht unter 50 µm. Auf diese Weise beeinflusst die Verbindungsschicht das elastische Verhalten des gesamten Faserverbundstoffs nicht zu sehr, insbesondere wenn die Stärke der elastischen Trägerschicht 100 µm übersteigt. Auf diese Weise kann eine ausreichende Zugelastizität der Gesamtanordnung gewährleistet werden.

Dieses gilt insbesondere bei Faserlängen zwischen 0,2 bis 3 mm im Zusammenspiel mit einer Faserstärke zwischen 1 und 20 dtex, wodurch eine ausreichend eigensteife Faser bereitgestellt wird, die dann der Gesamtanordnung betriebssicher einen flauschigen Charakter verleiht, ohne die Elastizität maßgeblich zu beeinträchtigen.

Bei derartigen Faserlängen beträgt die Eindringtiefe, sie es in eine Verbindungsschicht, sei es in eine Trägerschicht, vorzugsweise zwischen 2% und 15 % der Faselänge. Hierdurch wird ebenfalls sichergestellt, dass die eingedrungenen Fasern die Zugelastizität nicht zu nachteilig beeinflussen.

Vorzugsweise sind die Fasern mit einer Ausreißkraft zwischen 6 N/cm² und 70 N/cm², vorzugsweise mit einer Ausreißkraft über 10 N/cm² und/oder unter 60 N/cm², an dem Trägerfilm befestigt. Hierbei wird die Ausreißkraft derart definiert, dass die Fasern in einen Klebstoffkörper eingebettet werden, der dann in einer Zugprüfmaschine von dem Trägerfilm entfernt wird. Die in dem Klebstoffkörper befindlichen Fasern reißen bei einer Ausreißkraft aus dem Trägerfilm bzw. aus der Verbindungsschicht aus, wobei die Ausreißkraft, also die Kraft, bei welcher ein derartige Ausreißen erfolgt, mit der Zugprüfmaschine ohne weiteres gemessen werden kann. Für die Messung wird vorzugsweise ein Kreisring mit 10 mm Durchmesser auf die Fasern aufgelegt, in welchen dann ein nahezu beliebiger Klebstoff eingefüllt wird. Dieser Klebstoff sollte gut aushärten und die Fasern gut ergreifen können, ohne zu sehr auf der Verbindungsschicht oder dem Trägerfilm zu haften. Vorzugsweise ist die Viskosität dieses Klebstoffs derart gewählt, dass er die Verbindungsschicht bzw. den Trägerfilm gar nicht erreicht. Nach dem Aushärten bildet dieser Klebstoff dann an einen festen, die Fasern umschließenden Körper, welcher der Zugprüfmaschine zugeführt werden kann. Durch eine derartige Ausreißkraft entsteht ein ausreichend stabiler Flächen verbundstoff, der jedoch durch die Faserbindung nicht zu stark verfestigt und somit in seiner Elastizität beeinträchtigt ist.

Unabhängig von der Verbindungsweise der Fasern mit dem Trägerfilm wird vorgeschlagen, dass die Fasern zumindest überwiegend kurze, vom elastischen Trägerfilm abstehende Fasern sind. Bei einer solchen Gestaltung weisen die Fasern jeweils an ihrem einen Ende den Verbindungsbereich zum elastischen Trägerfilm auf, während das andere Faserende vom Trägerfilm absteht und somit die äußere Oberfläche des zugelastischen Flächenverbundstoffs darstellt. Dies führt zu einer sehr angenehmen Haptik.

Eine besonders angenehme Haptik wird erreicht, wenn die Fasern zumindest überwiegend etwa senkrecht von dem Trägerfilm abstehen, bevorzugt mit einer Abweichung von höchstens etwa 30 ° zur Senkrechten zur Folienebene, vor allem von höchstens etwa 20°. Begrifflich sei hierzu erläutert, dass sich die Winkelangabe auf denjenigen Teil der Faser bezieht, welcher unmittelbar benachbart zu dem jeweiligen Verbindungsbereich liegt. Wenn also beispielsweise eine Einzelfaser mit einer Gesamtlänge von 1 mm mit einer Länge von 0,2 mm in den elastischen Trägerfilm oder eine Verbindungsschicht eingedrungen ist, bezieht sich die geforderte Winkelangabe auf die Tangente an derjenigen Stelle, an welcher die Faser aus dem Trägerfilm bzw. der Verbindungsschicht austritt, konkret also auf die Tangente an die Faser in einer Entfernung von 0,8 mm vom freien Ende der Faser.

Besonders bevorzugt ist es, wenn auch die freien Enden der Fasern die angegebenen Winkelmaße einhalten, wobei insgesamt davon auszugehen ist, dass die räumliche Ausrichtung der Fasern am freien Ende derjenigen Ausrichtung an der Austrittsstelle aus dem Trägerfilm bzw. der Verbindungsschicht umso mehr entspricht, je kürzer die Fasern sind.

Nicht nur im Lichte dessen wird vorgeschlagen, dass die Fasern im Median eine Länge von 0,2 mm bis 3 mm haben, bevorzugt von etwa 0,5 mm bis etwa 1 mm. Bei Versuchen seitens der Erfinder hat sich herausgestellt, dass solche Fasern sowohl leicht in der gewünschten Ausrichtung in die Oberfläche des Trägerfilms bzw. in eine elastische Zwischenschicht eingebracht werden können. Zum anderen knicken die Fasern bei einer solchen Kürze nur relativ schwer aus, was ihnen auch bei einem Anpressdruck, beispielsweise durch einen Finger des Benutzers, eine relativ gleichbleibende Haptik verleiht.

Ein zugelastischer Flächenverbundstoff der vorgeschlagenen Art lässt sich sehr wirtschaftlich erzeugen, wenn das textile Material als Beflockung auf den elastischen Trägerfilm aufgebracht ist. Die Beflockung ist eine weit erprobte Technik, so dass insbesondere auch auf bekannte Maschinenwerkzeuge zurückgegriffen werden kann.

Der Trägerfilm ist bevorzugt vollflächig elastisch ausgebildet. Bei einer solchen Gestaltung sind ausgehend von einem vollflächig elastischen Ursprungsfilm, mit Ausnahme des Zurechtschneidens, keine weiteren Vorfertigungsschritte notwendig. Alternativ hierzu lässt sich die Erfindung allerdings auch auf teilelastische Materialien anwenden, wie beispielsweise Windeltapes mit einer elastischen Zwischenspur bzw. Materialien mit elastischeren und inelastischeren Bereichen, die beispielsweise durch gezieltes Vorstrecken bereitgestellt werden.

Es wird vorgeschlagen, dass der Trägerfilm ein bevorzugt thermoplastisches Elastomer oder ein bevorzugt thermoplastisches Polymer mit isotropem Dehnungsverhalten aufweist. Elastomere und Polymere sind erprobte Werkstoffe zum Herstellen von elastischen Trägerfilmen. Der Vorteil bei der Auswahl eines thermoplastischen Werkstoffs dieser Gattungen liegt darin, dass die Fasern allein in Folge einer aufgewärmten Oberfläche des Trägerfilms mechanisch in diese eingebracht werden können, so dass nach Abkühlen der Oberfläche der vorgeschlagene Flächenverbundstoff erhalten wird. Besonders in einem Herstellungsverfahren, in welchem der Trägerfilm ohnehin warm hergestellt wird, können die Fasern somit ohne weiteres eingebracht werden.

Nach einem zweiten Aspekt der Erfindung löst die gestellte Aufgabe ein Verfahren zum Herstellen eines Flächenverbundstoffs mit einem elastischen Trägerfilm, der zumindest an einer Seite mit einem textilen Material kaschiert ist, wobei das textile Material einzelne Fasern umfasst, die jeweils mit dem elastischen Trägerfilm verbunden sind, wobei die Einzelfasern in eine warme verbindungsfähige Oberfläche am oder im Trägerfilm ausgerichtet eingebracht werden.

Ebenso löst diese Aufgabe ein Verfahren zum Herstellen eines Flächenverbundstoffs mit einem elastischen Trägerfilm, der zumindest an einer Seite mit einem textilen Material kaschiert ist, wobei das textile Material einzelne Fasern umfasst, die jeweils mit dem elastischen Trägerfilm verbunden sind, wobei die Einzelfasern an ein warme verbindungsfähige Oberfläche am Trägerfilm oder an eine warme verbindungsfähige Oberfläche im Trägerfilm ausgerichtet angebracht werden

Begrifflich sei hierzu erläutert, dass unter einer "verbindungsfähigen" Oberfläche eine Oberfläche verstanden wird, in welche bzw. an welcher Fasern zum Teil, nämlich mit deren Verbindungsbereichen, rein mechanisch ein- bzw. angebracht werden können. Insbesondere soll die Oberfläche so verbindungsfähig sein, dass bevorzugt schon das Eigengewicht der einzelnen Fasern ausreicht, um diese verbindungsfest in die Oberfläche eindringen zu lassen bzw. an dieser verbindungsfest anhaften zu lassen.

Es wurde bereits darauf hingewiesen, dass die Einzelfasern beispielsweise in die warme Oberfläche eines thermoplastischen Elastomers oder eines thermoplastischen Polymers eingebracht werden können, welches als Trägerfilm fungiert. Hierbei kann ohne weitere Hilfsstoffe ausgekommen werden, allerdings muss dafür der Trägerfilm erwärmt sein. Selbst dies kann jedoch ohne zusätzlichen Arbeitsschritt erreicht werden, wenn der Trägerfilm aus einem hierzu vorgehaltenen Werkstoff extrudiert wird und dann noch vor dem Abkühlen des Films die Fasern in die Oberfläche eingebracht werden.

In einer ebenfalls bereits erläuterten Variante hierzu kann auf den Trägerfilm eine Hotmelt-Kleberschicht aufgetragen werden, bevor die Einzelfasern in dessen Oberfläche eingebracht werden. Bei einem solchen Verfahren ist vorteilhaft kein warmer Trägerfilm notwendig. Beim Auftragen des Schmelzklebers ist dieser ohnehin warm, so dass auch hier die Fasern bevorzugt in seine Oberfläche eingebracht werden, bevor er abkühlt. Auch dies ist eine sehr wirtschaftliche Herstellungsvariante.

Die Fasern werden bevorzugt über eine Schütte aufgerieselt. Unter einer Schütte wird eine Einrichtung verstanden, welche räumlich oberhalb des Trägerfilms angeordnet ist und durch welche die Fasern bevorzugt aus einem angeschlossenen Vorratsbehälter auf den Trägerfilm aufgerieselt werden können. Dabei kann der Trägerfilm beispielsweise mit einer gleichförmigen Geschwindigkeit unter der Schütte bewegt werden, so dass bei konstantem Schüttstrom eine relativ homogene Kaschierung auf dem Trägerfilm erreicht wird.

Um die Fasern möglichst homogen auf den Trägerfilm rieseln zu können und die Fasern hierzu möglichst schüttfähig zu halten, wird vorgeschlagen, dass die Schütte einen Vibrationserreger aufweist. Ein solcher kann beispielsweise eine Frequenz von 1 Hz bis 1000 Hz auf eine Gehäusewand der Schütte mit kleiner Amplitude aufbringen. Bei Versuchen der Erfinder hat sich gezeigt, dass hierdurch sehr gute Ergebnisse bezüglich der homogenen Kaschierung des zugelastischen Flächenverbundstoffs erreicht werden.

Es wird vorgeschlagen, dass die Fasern über ein elektrostatisches Feld oder ein sonstiges entsprechendes Feld ausgerichtet werden, bevor, während und/oder nachdem sie in die Oberfläche an oder im Trägerfilm eingebracht werden. Es wurde bereits erläutert, dass die Haptik des herzustellenden Flächenverbundstoffs eine besondere Güte erhält, wenn die Fasern möglichst gleichmäßig senkrecht von dem Trägerfilm abstehen. Hierzu ist es notwendig, die Fasern auszurichten. Da die Fasern sehr klein sind, geschieht dies am besten berührungslos insbesondere über ein elektrostatisches Feld.

Die Fasern können vor allem Polymer-, Natur- oder Mineralfasern sein. Bei Versuchen der Erfinder hat sich beispielsweise eine Konstellation als vorteilhaft gezeigt, bei welcher eine metallische Schütte an eine Kathode angeschlossen wurde. Unterhalb des Transportbands für den elastischen Trägerfilm wurde eine Anode angeordnet und mit dem metallischen Transportband verbunden, so dass dieses insgesamt anodisch war. Durch das erzeugte elektrische Feld fielen die Fasern in überraschend starkem Maße zueinander parallel und drangen auch weitestgehend parallel in die Oberfläche des Trägerfilms ein und verharrten dort in diesem Winkel, bis die Oberfläche erkaltete und der Flächenverbundstoff somit seinen Endzustand annahm.

Hierzu sei erläutert, dass die Fasern so leicht und kurz sind, dass bereits die geringe Viskosität der erwärmten Oberfläche in der Regel ausreicht, um sie gegenüber der aus ihrer Masse resultierenden kippend wirkenden Beschleunigung ausreichend sicher in dem einmal eingenommenen räumlichen Winkel in der Oberfläche des Trägerfilms zu halten. Es kommt daher bei geeigneter Abstimmung von Fasern, Werkstoff des Trägerfilms und Temperatur der Werkstattoberfläche des Trägerfilms nur darauf an, die Fasern in der gewünschten Ausrichtung in die Oberfläche einzubringen. Eine von außen kommende mechanische Belastung wirkt auf die Fasern erst, nachdem diese erkaltet sind, denn erst dann wird das Band beispielsweise aufgewickelt oder auch vom Benutzer angefasst. Um eine solche Ausrichtung sicher in hoher Güte zu erreichen, reicht beispielsweise bereits das elektrostatische Feld aus.

Unabhängig vom Vorhandensein eines elektrostatischen Feldes, bevorzugt aber in Ergänzung hierzu, ist eine Drucklufteinrichtung vorgesehen, welche die Fasern in Richtung zum verbindungsfähigen Trägerfilm hin beschleunigt. Auf diese Weise können die Fasern innerhalb einer kurzen Fallstrecke zu einer hohen Einschlaggeschwindigkeit in die Oberfläche des Trägerfilms gebracht werden. Die kurze Fallstrecke ist von Vorteil, um ein Verdrehen der Fasern möglichst zu vermeiden. Mit erhöhter Geschwindigkeit der Fasern beim Auftreffen auf die Oberfläche des Trägerfilms können an dessen Aufnahmebereitschaft geringere Anforderungen gestellt werden, beispielsweise kann die Temperatur niedriger gewählt werden.

Ein Flächenverbundstoff der vorbeschriebenen Art eignet sich besonders zum Einsatz als Verschlussband für einen Hygieneartikel, insbesondere für eine Baby- oder eine Inkontinenzwindel, wobei ein solches Verschlussband einseitig oder zweiseitig und/oder ganzflächig oder teilflächig in der vorgeschlagenen Weise kaschiert sein kann.

Um ein solches Band wirtschaftlich herstellen zu können, liegt bevorzugt ein Bandmaterial mit einer Längserstreckungsrichtung vor, welches durch Trennen quer zur Längserstreckungsrichtung und gegebenenfalls auch im wesentlichen in Längserstreckungsrichtung zu Einzelnutzen in Form solcher Verschlussbänder aufteilbar ist, und zwar bevorzugt ohne Verschnitt. Ein solches Bandmaterial kann vor allem in Form einer Wicklung, insbesondere einer Rolle oder einer Spule, gut zum Hersteller transportiert und von diesem verarbeitet werden.

Die vorteilhaften Eigenschaften eines Bindeverschlussbands mit einem zugelastischen Flächenverbundstoff gemäß den vorstehenden Vorschlägen wirken sich unmittelbar auch auf eine Windel aus, welche mit solchen Verschlussbändern bestückt ist.

Die Erfindung wird nachstehend anhand fünfer Ausführungsbeispiele unter Bezugnahme auf die Zeichnung näher erläutert. Es zeigen:
- Fig. 1: einen schematischen Schnitt durch einen Flächenverbundstoff mit einem elastischen Trägerfilm, einer Hotmelt-Verbindungsschicht und einer Faser-Flocklage,
- Fig. 2: in einem gleichartigen schematischen Schnitt eine alternative Ausführungsform eines zugelastischen Flächenverbundstoffs mit einem elastischen Trägerfilm und einer hierauf direkt aufgebrachten Faser-Flocklage,
- Fig. 3: eine Prinzipskizze für ein Herstellungsverfahren eines zugelastischen Flächenverbundstoffs mit einer Beflockung auf einer Hotmelt-Kleberschicht,
- Fig. 4: in einer gleichartigen Prinzipskizze eine Variante eines Herstellverfahrens für einen zugelastischen Flächenverbundstoff, bei welchem Fasern unmittelbar auf ein thermoplastisches Elastomer geflockt werden, und
- Fig. 5: in einer gleichartigen Prinzipskizze eine dritte Variante eines Herstellverfahrens für einen zugelastischen Flächenverbundstoff, bei welchem ein thermoplastisches Elastomer extrudiert wird und Fasern hierauf über eine Hotmelt-Kleberschicht aufgeflockt werden.

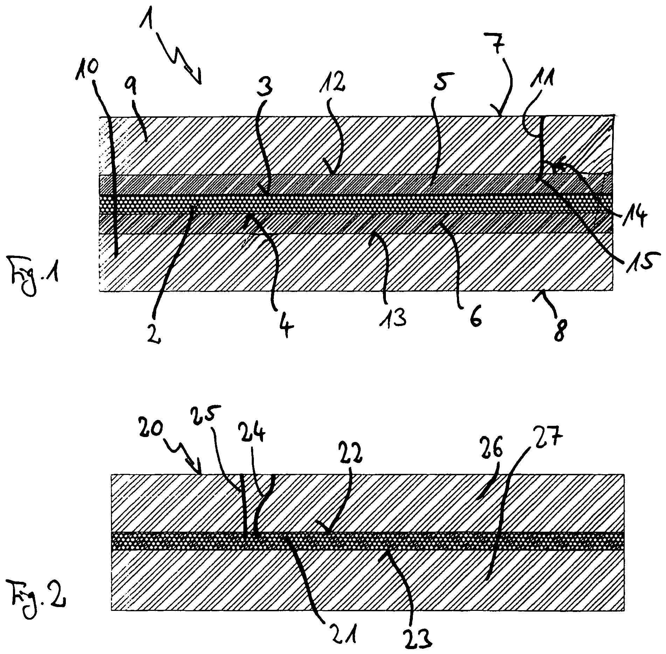

Der zugelastische Flächenverbundstoff 1 in Fig. 1 bezieht seine Elastizität aus dem elastischen Trägerfilm 2. Dieser bildet mechanisch den Kern des Flächenverbundstoffs 1 und gibt dem Flächenverbundstoff 1 seine wesentlichen mechanischen Eigenschaften.

Da der Flächenverbundstoff 1 als Bandmaterial hergestellt werden und nach Zuschnitt und Bestücken mit weiteren funktionalen Einheiten die Basis für ein Windelverschlussband ergeben soll, ist der elastische Trägerfilm recht dünn, nämlich beispielsweise etwa 20 µm bis 80 µm.

Auf beiderseitige Oberflächen 3, 4 des elastischen Trägerfilms 2 sind die beiden Verbindungsschichten 5, 6 aus Schmelzkleber flächig aufgebracht. In Folge des inneren Verbundes jeweils einer Schmelzkleberschicht 5 bzw. 6 und der flächigen Verbindung mit dem elastischen Trägerfilm 2 hat auch der Schmelzkleber Einfluss auf das mechanische Gesamtverhalten des Flächenverbundstoffs 1.

Zu beiden Seiten des Flächenverbundstoffs 1 hin werden dessen äußere Oberflächen 7, 8 durch freie Enden von einzelnen Fasern und einzelnen Faseragglomeraten gebildet, welche jeweils eine Länge von etwa 0,2 mm haben und in einer hohen Flächendichte zueinander angeordnet sind, so dass sich zu jeder Seite des zugelastischen Flächenverbundstoffs 1 jeweils eine Faserflocklage 9 bzw. 10 ausbildet.

Obwohl die einzelnen Fasern (exemplarisch einmal in der Faserflocklage 9 dargestellt und mit 11 beziffert) mit einer Faserdicke von etwa 1 bis 20 dtex recht dünn sind, bilden sie an den Oberflächen 7 bzw. 8 des zugelastischen Flächenverbundstoffs eine Oberfläche mit textilem Charakter und einer gewissen mechanischen Druckfestigkeit. Dies ist darauf zurückzuführen, dass die einzelnen Fasern 11 bzw. die Faseragglomerate aus einer Oberfläche 12 bzw. 13 der Schmelzkleber-Verbindungsschichten mit einem Winkel 14 von etwa 90 ° abstehen. Aufgrund der geringen Länge der Fasern 11 bzw. der Faseragglomerate und der dichten Faseranordnung zu den Flocklagen 9 bzw. 10 ergibt sich eine recht hohe Festigkeit.

Die Fasern 11 bzw. die Faseragglomerate sind mit einem kleinen Teil ihrer Gesamtlänge, nämlich einem Verbindungsbereich 15, in die Oberflächen 12 bzw. 13 der Schmelzkleber-Verbindungslagen 5 bzw. 6 eingedrungen, so dass sich insgesamt auch eine ausreichend stabile Verbindung zwischen den Flocklagen 9 bzw. 10 und dem elastischen Trägerfilm 2 über die rückwärtigen flächigen Verbindungen zwischen den Schmelzkleber-Verbindungsschichten 5 bzw. 6 und dem Film 2 ergeben.

Der zugelastische Flächenverbundstoff 20 nach Fig. 2 besteht ebenfalls im Kern aus einem elastischen Trägerfilm 21. In dessen Oberflächen 22 bzw. 23 sind jedoch die Fasern (exemplarisch mit 24, 25 dargestellt) unmittelbar mit Verbindungsbereichen eingebracht. Auf diese Weise ergeben sich ohne Hinzufügung eines Klebstoffs unmittelbar auf dem elastischen Trägerfilm 21 die beiden Faserflocklagen 26, 27. Der elastische Trägerfilm 21 ist hierzu aus einem thermoplastischen Elastomer gebildet, dessen Oberflächen 22, 23 bei Erwärmung so aufnahmefähig sind, dass eingeschossene Fasern 24, 25 in sie mit ihren Verbindungsbereichen eindringen können. Nach dem Abkühlen der Oberflächen 22, 23 des elastischen Trägerfilms 21 liegt auf diese Weise ein reversibler, aber ohne Erwärmung für die meisten Zwecke ausreichend stabiler mechanischer Verbund zwischen den Fasern 24, 25 bzw. Faseragglomeraten und dem elastischen Trägerfilm 21 vor.

Als Fasern bzw. Faseragglomerate kommen vorzugsweise welche aus PA (Polyamid) oder PES (Polyester) zu Anwendung. Diese Materialien stehen insbesondere ausreichend eigensteif ab, so dass die Gefahr eines Absinkens minimiert werden kann. Als Trägerfilm kann für beide Ausführungsbeispiele insbesondere ein thermoplastisches Elastomer (TPE) zur Anwendung kommen.

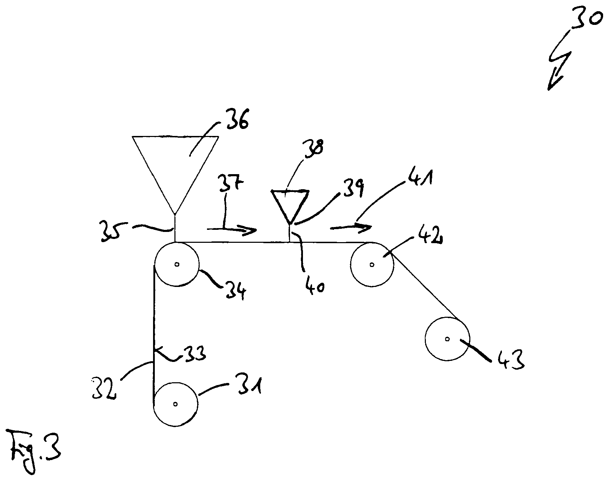

Mit dem in Fig. 3 dargestellten schematischen Produktionssystem 30 kann ein thermoplastisches Elastomer mit einer Schmelzkleber-Verbindungslage und einer Faser-Flocklage verbunden werden, so dass sich beispielsweise ein zugelastischer Flächenverbundstoff wie in Fig. 1 gezeigt, jedoch mit einer einseitigen Kaschierung, ergibt.

Hierzu wird zunächst von einer Vorratsrolle oder Vorratsspule 31 ein Endlosband 32 aus einem thermoplastischen Elastomer abgewickelt. Um dieses problemlos abwickeln zu können und durch die Maschinenwerkzeuge laufen lassen zu können, ist auf einer Unterseite 33 des Endlosbandes 32 eine Linerfolie angeordnet.

Mit der vom Liner bedeckten Unterseite 33 läuft das Endlosband 32 aus thermoplastischem Elastomer um eine Auftragswalze 34 und wird dort mit einem konstanten Strom 35 eines Schmelzklebers aus einer hierzu vorgehaltenen Auftragseinrichtung 36 homogen bedeckt.

Das Endlosband 32 läuft in seiner Transportrichtung 37 mit der heißen Kleberoberfläche weiter und durchläuft ein Beflockwerkzeug, welches aus einem Faservorratsbehälter 38 kommende, dort mit einem elektrostatischen Feld möglichst parallel zueinander ausgerichtete Einzelfasern aus einer Schüttöffnung 39 in einem gleichmäßigen Strom 40 homogen in die noch warme Oberfläche des Schmelzklebers schießt.

Im weiteren Verlauf 41 liegt daher nun schon ein zugelastischer Flächenverbundstoff mit einem elastischen Trägerfilm aus thermoplastischem Elastomer und einer einseitigen textilen Kaschierung aus Flockfasern vor.

Dieser Flächenverbundstoff umläuft sodann eine Kühlwalze 42 und kühlt infolgedessen soweit ab, dass der Flächenverbundstoff mechanisch fest wird. Das so erhaltene Bandmaterial wird an einem Aufwickelwerkzeug 43 wieder zu einer Rolle oder Spule aufgewickelt und kann in dieser Form leicht weiteren Verarbeitungsschritten zugeführt werden, beispielsweise der Herstellung eines Windelverschlussbands.

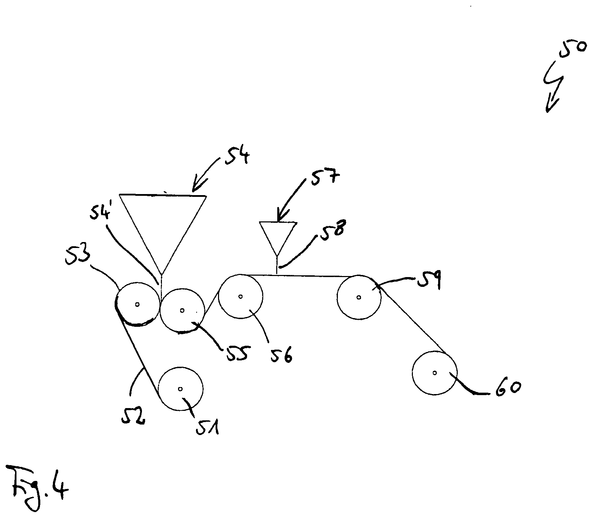

Das in Fig. 4 schematisch dargestellte Produktionssystem 50 erzeugt einen zugelastischen Flächenverbundstoff mit direkter Beflockung eines thermoplastischen Elastomers ohne Kleber-Verbindungsschicht.

Hierzu wird von einer Vorratsrolle oder Vorratsspule 51 ein Endlosband 52 einer Linerfolie abgewickelt. Dieses umläuft zunächst eine Angußwalze 53 und wird ausgangs dieser einem Auftragswerkzeug 54 für eine thermoplastische Elastomermasse zugeführt. Diese läuft in einem stetigen Strom 55 auf die Oberfläche des Liners 52 und wird unmittelbar anschließend von einer Andruckwalze 55 mit einer gleichförmigen Dicke auf den Liner 52 aufgepresst.

Noch bevor das thermoplastische Elastomer abkühlt, wird es über eine weitere Transportwalze 56 einer Flockeinrichtung 57 zugeführt, welche in einem ebenfalls stetigen Strom 58 die freiliegende Oberfläche des thermoplastischen Elastomers mit einer flauschigen Flocklage versieht.

Beim Umlaufen einer Kühlwalze 59 wird die Oberfläche des thermoplastischen Elastomers so weit abgekühlt, dass zwischen den Flockfasern und dem elastischen Trägerband ein mechanisch stabiler Verbund erreicht wird.

Das auf diese Weise erhaltene elastische Verbundmaterial wird anschließend an einem Aufwickelwerkzeug 60 zu einer Rolle oder Spule aufgewickelt und steht in dieser Form weiteren Bearbeitungsschritten zur Verfügung.

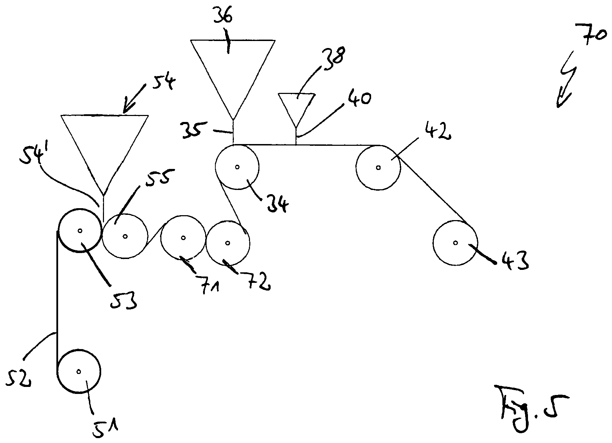

Das in Fig. 5 dargestellte schematische Herstellungssystem 70 erzeugt ein mit dem System 30 vergleichbares Band, also ein Band mit drei funktionalen Lagen, nämlich einem elastischen Trägerfilm, einer Schmelzkleber-Verbindungsschicht und einer Faserflocklage, so wie dies auch im Band 1 in Fig. 1 der Fall ist. Anders als das Herstellungssystem 30 in Fig. 3 setzt es allerdings nicht voraus, dass bereits ein Endlosband aus Elastomer auf einem Liner angeliefert wird. Vielmehr extrudiert es ein solches Bandmaterial selbst mit Hilfe eines auf einer Rolle oder Spule 51 angelieferten Endloslinerbandes 52, einer Auftragswalze 53, einer Auftragseinrichtung 54 und einer Andruckwalze 55 für einen stetigen Strom 54' eines thermoplastischen Elastomers.

Insoweit ist die Herstellung eines Endlosbandes mit einem thermoplastischen Elastomer mit warmer Oberfläche auf einem Liner identisch mit dem System 50 in Fig. 4.

Nachdem das Bandmaterial zwei Kühlwalzen 71, 72 passiert hat, läuft es in ein weiteres Beschichtungssystem, welches identisch mit demjenigen des Systems 30 aus Fig. 3 ist. Es passiert eine Auftragswalze 34 und wird dort mit einem steten Strom 35 eines Schmelzklebers aus einem hierzu vorgesehenen Werkzeug 36 bedeckt.

Bevor der Schmelzkleber abkühlt, wird mit einem Beflockwerkzeug 38 ein flauschiges Flockmaterial in einem konstanten Strom 40 in die warme Oberfläche der Schmelzkleber-Verbindungsschicht geschossen.

Nach dem Umlaufen einer Kühlwalze 42 ist der zugelastische Flächenverbundstoff mechanisch fest und wird an einem Aufwickelwerkzeug 43 zu einer Rolle oder Spule für die weitere Verarbeitung aufgewickelt.

Beide vorgestellten Bänder 1 bzw. 20 und alle drei vorgestellten Herstellungssysteme 30, 50 bzw. 70 stellen kostengünstig einen zugelastischen Flächenverbundstoff mit vielseitiger Einsetzbarkeit zur Verfügung. Insbesondere lassen sich solche zugelastischen Flächenverbundstoffe als Basis zum Herstellen von Windelverschlussbändern einsetzen.

Eine ausreichende Eindringtiefe kann insbesondere durch eine gezielte Beschleunigung und Ausrichtung der einzelnen Fasern bzw. Faseragglomerate geschehen. Beispielsweise kann hierzu Hochspannung zur Anwendung kommen, die einerseits durch Abstoßkräfte richtend und andererseits beschleunigend wirkt. Vorzugsweise übersteigt die Eindringtiefe 25 % der Stärke der Trägerschicht nicht, so dass die Elastizität der Gesamtanordnung nach wie vor durch die Trägerschicht bestimmt wird.

Es versteht sich, dass diese Ausführungsbeispiele im Einzelnen modifiziert werden können. Insbesondere bei der Herstellung eines Flächenverbundstoffs mit drei funktionalen Lagen kann auf einen Liner verzichtet werden, wenn der elastische Trägerfilm 2 ausreichend stabil geführt wird. Dieses gilt allerdings auch im Falle einer unmittelbaren Verbindung zwischen Trägerfilm und Fasern 11, wenn es gelingt, den Trägerfilm während des Beflockens und bis zum Erhärten ausreichend stabil zu führen. Auch ist es senkbar, den Trägerfilm nach dem Härten erneut aufzuweichen, beispielsweise durch Erwärmen oder durch andere physikalische bzw. chemische Prozesse, um eine Verbindung mit den fasern zu ermöglichen. insbesondere kann die Aufweichung auch lediglich in einer Oberschicht erfolgen, so dass die selbsttragende Integrität des Trägerfilms nicht beeinträchtigt wird.
Einsetzbarkeit zur Verfügung. Insbesondere lassen sich solche zugelastischen Flächenverbundstoffe als Basis zum Herstellen von Windelverschlussbändern einsetzen.

Eine ausreichende Eindringtiefe kann insbesondere durch eine gezielte Beschleunigung und Ausrichtung der einzelnen Fasern bzw. Faseragglomerate geschehen. Beispielsweise kann hierzu Hochspannung zur Anwendung kommen, die einerseits durch Abstoßkräfte richtend und andererseits beschleunigend wirkt. Vorzugsweise übersteigt die Eindringtiefe 25 % der Stärke der Trägerschicht nicht, so dass die Elastizität der Gesamtanordnung nach wie vor durch die Trägerschicht bestimmt wird.

Es versteht sich, dass diese Ausführungsbeispiele im Einzelnen modifiziert werden können. Insbesondere bei der Herstellung eines Flächenverbundstoffs mit drei funktionalen Lagen kann auf einen Liner verzichtet werden, wenn der elastische Trägerfilm 2 ausreichend stabil geführt wird. Dieses gilt allerdings auch im Falle einer unmittelbaren Verbindung zwischen Trägerfilm und Fasern 11, wenn es gelingt, den Trägerfilm während des Beflockens und bis zum Erhärten ausreichend stabil zu führen. Auch ist es denkbar, den Trägerfilm nach dem Härten erneut aufzuweichen, beispielsweise durch Erwärmen oder durch andere physikalische bzw. chemische Prozesse, um eine Verbindung mit den fasern zu ermöglichen. insbesondere kann die Aufweichung auch lediglich in einer Oberschicht erfolgen, so dass die selbsttragende Integrität des Trägerfilms nicht beeinträchtigt wird.

## Patentansprüche

1. Zugelastischer Flächenverbundstoff (1; 20) mit einem elastischen Trägerfilm (2;21), welcher zumindest an einer Seite (3, 4; 22, 23) mit einem textilen Material (9, 10; 26, 27) kaschiert ist, ***dadurch gekennzeichnet, dass*** das textile Material (9, 10; 26, 27) ausgerichtete Einzelfasern (11; 24, 25) mit einer Länge von maximal 10 mm umfasst, welche jeweils ausgerichtet mit dem elastischen Trägerfilm (2; 21) verbunden sind.

2. Flächenverbundstoff nach Anspruch 1, ***dadurch gekennzeichnet, dass*** die Einzelfasern (11; 24, 25) zu mindestens 50 %, bevorzugt zu mindestens 75 %, vor allem zu mindestens 90 %. jeweils genau einen Verbindungsbereich (15) zum elastischen Trägerfilm (2; 21) aufweisen.

3. Flächenverbundstoff nach Anspruch 1 oder 2, ***dadurch gekennzeichnet, dass*** die Einzelfasern (11; 24, 25 mit ihrem Verbindungsbereich (15) in den elastischen Trägerfilm (2; 21) eingedrungen sind.

4. Flächenverbundstoff nach Anspruch 1 oder 2, ***dadurch gekennzeichnet, dass*** die Einzelfasern (11; 24, 25) mit ihrem Verbindungsbereich (15) mit einer Verbindungsschicht verbunden, insbesondere in eine Verbindungsschicht (5, 6) eingedrungen, sind, welche ihrerseits mit dem elastischen Trägerfilm (2: 21) flächig verbunden ist.

5. Flächenverbundstoff nach Anspruch 4, *d**adurch gekennzeichnet***, ***dass*** die Verbindungsschicht (5, 6) eine Hotmelt-Kleberschicht ist.

6. Flächenverbundstoff nach einem der Ansprüche 3 bis 5, ***dadurch gekennzeichnet, dass*** die Eindringtiefe zwischen 2% und 15% der Faserlänge beträgt.

7. Flächenverbundstoff nach einem der vorhergehenden Ansprüche, ***dadurch gekennzeichnet, dass*** die Fasern(11; 24, 25) mit einer Ausreißkraft zwischen 6N/cm² und 70 N/cm², vorzugsweise mit einer Ausreißkraft über 10 N/cm² und/oder unter 60 N/cm², an dem Trägerfilm befestigt sind, wobei die Ausreißkraft derart definiert ist, dass die Fasern in einem Klebstoffkörper eingebettet werden, der dann in einer Zugprüfmaschine von dem Trägerfilm entfernt wird.

8. Flächenverbundstoff nach einem der vorhergehenden Anspüche, ***dadurch gekennzeichnet, dass*** die Fasern (11; 24, 25) zumindest überwiegend in einem etwa senkrechten Winkel (14) von dem Trägerfilm (2; 21) abstehen, bevorzugt mit einer Abweichung von höchstens 30 ° zur Senkrechten zum Trägerfilm, vor allem von höchstens 20°.

9. Flächenverbundstoff nach einem der vorhergehenden Ansprüche, ***dadurch gekennzoichnot, dass*** die Fasern (11; 24, 25) im Median eine Länge von 0,2 mm bis 3 mm aufweisen, bevorzugt von etwa 0,5 mm bis 1 mm.

10. Flächenverbundstoff nach einem der vorhergehenden Ansprüche, ***dadurch gekennzeichnet, dass*** der Trägerfilm (2: 21) vollflächig elastisch ausgebildet ist.

11. Verfahren zum Herstellen eines Flächenverbundstoffs nach einem der vorhergehenden Ansprüche, ***dadurch gekennzeichnet, dass*** Einzelfasern (11; 24, 25) in und/oder an ein warme verbindungsfähige Oberfläche (12, 13) am Trägerfilm (2; 21) oder in und/oder an eine warme verbindungsfähige Oberfläche (22, 23) im Trägerfilm (2; 21) ausgerichtet ein- bzw. angebracht werden.

12. Verschlussband für einen Hygieneartikel, insbesondere für eine Babywindel oder eine Inkontinenzwindel, mit einem zugelastischen Flächenverbundstoff (1; 20) nach einem der Ansprüche 1 bis 10.

13. Bandmaterial mit einer Längserstreckungsrichtung, welches durch Trennen quer zur Längserstreckungsrichtung und gegebenenfalls auch im wesentlichen in Längserstreckungsrichtung zu Einzelnutzen in Form von Verschlussbändern nach Anspruch 12, bevorzugt ohne Verschnitt, aufteilbar ist, vor allem in Form einer Wicklung, insbesondere Rolle oder Spule.

14. Windel mit einem Verschlussband nach Anspruch 12.

## Claims

1. A tenso-elastic flat composite material (1; 20) with an elastic carrier film (2; 21), which is laminated at least on one side (3, 4; 22, 23) with a textile material (9, 10; 26, 27), **characterized in that** the textile material (9, 10; 26, 27) comprises aligned fibres (11; 24, 25) with a length not exceeding 10 mm, each of which is aligned and bonded with the elastic carrier film (2; 21).

2. The flat composite material according to claim 1, **characterized in that** at least 50 %, preferably at least 75 %, most particularly at least 90 % of the individual fibres (11; 24, 25) each have exactly one bonding region (15) with the elastic carrier film (2; 21).

3. The flat composite material according to claim 1 or 2, **characterized in that** the bonding region (15) of each individual fibre (11; 24, 25) has penetrated the elastic carrier film (2; 21).

4. The flat composite material according to claim 1 or 2, **characterized in that** the bonding region (15) of each individual fibre (11; 24, 25) is bonded to a bonding layer, in particular has penetrated a bonding layer (5, 6), which bonding layer is itself bonded flush with the elastic carrier film (2; 21).

5. The flat composite material according to claim 4, **characterized in that** the bonding layer (5, 6) is a hotmelt adhesive layer.

6. The flat composite material according to any one of claims 3 to 5, **characterized in that** the penetration depth is equal to between 2 % and 15 % of the length of the fibre.

7. The flat composite material according to any one of the preceding claims, **characterized in that** the fibres (11; 24, 25) are attached to the carrier film with a pull-off strength between 6 N/cm³ and 70 N/cm³, preferably with a pull-off strength greater than 10 N/cm³ and less than 60 N/cm³, wherein the pull-off strength is defined such that the fibres are embedded in an adhesive body, which is then removed from the carrier film in a tensile testing machine.

8. The flat composite material according to any one of the preceding claims, **characterized in that** at least most of the fibres (11; 24, 25) project away from the carrier film (2; 21) substantially at a right angle (14) thereto, preferably at an inclination of not more than 30°, particularly not more than 20° from the perpendicular to the carrier film.

9. The flat composite material according to any one of the preceding claims, **characterized in that** the fibres (11; 24, 25) have a median length of 0.2 mm to 3 mm, preferably from about 0.5 mm to 1 mm.

10. The flat composite material according to any one of the preceding claims, **characterized in that** the entire area of the carrier film (2; 21) is of elastic construction.

11. A method for producing a flat composite material according to any one of the preceding claims, **characterized in that** individual fibres (11; 24, 25) are attached in alignment in and/or on a warm bondable surface (12, 13) on the carrier film (2; 21) or in and/or on a a warm bondable surface (22, 23) in the carrier film (2; 21).

12. A closure strip for a hygiene item, particularly for a baby nappy or incontinence nappy, with a tenso-elastic flat composite material (1; 20) acccording to any one of claims 1 to 10.

13. A strip material with a lengthwise alignment direction which can be divided for individual use as closure strips according to claim 12, preferably without cutting, by separating transversely to the lengthwise alignment direction and optionally substantially in that lengthwise alignment direction as well, paricularly in the form of a winding, more particularly a roll or coil.

14. A nappy having a closure strip according to claim 12.

## Revendications

1. Matière composite plane (1 ; 20) élastique en traction, avec un film support (2 ; 21) élastique, lequel est pelliculé au moins sur une face (3, 4 ; 22, 23) avec une matière textile (9, 10 ; 26, 27), **caractérisé en ce que** la matière textile (9, 10 ; 26, 27) comprend des fibres individuelles (11 ; 24, 25) orientée, d'une longueur d'un maximum de 10 mm, qui respectivement orientées sont reliées avec le film support (2 ; 21) élastique.

2. Matière composite plane selon la revendication 1, **caractérisée en ce que** les fibres individuelles (11 ; 24, 25) comportent pour au moins 50 %, de préférence pour au moins 75 %, prioritairement pour au moins 90 % respectivement exactement une zone de liaison (15) avec le film support (2 : 21) élastique.

3. Matière composite plane selon la revendication 1 ou 2, **caractérisée en ce que** par leur zone de liaison (15), les fibres individuelles (11 ; 24 ; 25) sont infiltrées dans le film support (2 ; 21).

4. Matière composite plane selon la revendication 1 ou 2, **caractérisée en ce que** par leur zone de liaison (15), les fibres individuelles (11 ; 24 ; 25) sont reliées avec une couche de liaison, notamment sont infiltrées dans une couche de liaison (5, 6), laquelle pour sa part est reliée en nappe avec le film support (2 ; 21) élastique.

5. Matière composite plane selon la revendication 4, **caractérisée en ce que** la couche de liaison (5, 6) est une couche adhésive thermofusible.

6. Matière composite plane selon l'une quelconque des revendications 3 à 5, **caractérisée en ce que** la profondeur d'infiltration s'élève à entre 2 % et 15 % de la longueur des fibres.

7. Matière composite plane selon l'une quelconque des revendications précédentes, **caractérisée en ce que** les fibres (11 ; 24, 25) sont fixées sur le film support avec une force d'arrachage comprise entre 6 N/cm² et 70 N/cm², de préférence avec une force d'arrachage supérieure à 10 N/cm² et/ou inférieure à 60 N/cm², la force d'arrachage étant définie en incorporant les fibres dans un corps en matière adhésive que l'on retire ensuite du film support dans une machine d'essai à la traction.

8. Matière composite plane selon l'une quelconque des revendications précédentes, **caractérisée en ce que** les fibres (11 ; 24, 25) dépassent au moins en majeure partie sous un angle (14) approximativement vertical du film support (2 ; 21), de préférence avec un écart d'un maximum de 30° par rapport à la verticale du film support, prioritairement d'un maximum de 20°.

9. Matière composite plane selon l'une quelconque des revendications précédentes, **caractérisée en ce que** les fibres (11 ; 24, 25) présentent dans la médiane une longueur de 0,2 mm à 3 mm, de préférence d'environ 0,5 mm à 1 mm.

10. Matière composite plane selon l'une quelconque des revendications précédentes, **caractérisée en ce que** le film support (2 ; 21) est conçu en étant élastique à pleine surface.

11. Procédé destiné à la fabrication d'une matière composite plane selon l'une quelconque des revendications précédentes, **caractérisé en ce qu'**on introduit ou on applique des fibres (11 ; 24, 25) individuelles orientées dans et/ou sur une surface (12, 13) chaude susceptible d'être reliée sur le film support (2 ; 21) et/ou sur une surface (22, 23) chaude susceptible d'être reliée dans le film support (2 ; 21).

12. Bande de fermeture pour un article d'hygiène, notamment pour une couche pour bébé ou pour incontinents, avec une matière composite plane (1 ; 20) élastique en traction selon l'une quelconque des revendications 1 à 10.

13. Matière en bande avec une direction d'extension longitudinale, laquelle par sectionnement à la transversale de la direction d'extension longitudinale et le cas échéant également sensiblement dans la direction d'extension longitudinale est divisible en unités sous la forme de bandes de fermeture selon la revendication 12, de préférence sans déchets, prioritairement sous la forme d'un enroulement, notamment d'un rouleau ou d'une bobine.

14. Couche avec une bande de fermeture selon la revendication 12.
